# EUROPÄISCHE PATENTSCHRIFT

(11) **EP 1 337 419 B1**
(45) Veröffentlichungstag und Bekanntmachung des Hinweises auf die Patenterteilung: **17.05.2006**
(21) Anmeldenummer: 01996483.2
(22) Anmeldetag: 16.11.2001
(51) Int. Cl.: B60S 1/38, B60S 1/40

(54) **VORRICHTUNG ZUM LÖSBAREN VERBINDEN EINES WISCHBLATTS ZUM REINIGEN VON SCHEIBEN INSBESONDERE VON KRAFTFAHRZEUGEN MIT EINEM ANGETRIEBENEN WISCHERARM**
DEVICE FOR DETACHABLY CONNECTING A WIPER BLADE FOR CLEANING WINDOWS OF, IN PARTICULAR, MOTOR VEHICLES TO A DRIVEN WIPER ARM
DISPOSITIF DE FIXATION LIBERABLE D'UN ESSUIE-GLACE POUR LE NETTOYAGE DE VITRES, EN PARTICULIER DE VEHICULES A MOTEUR, SUR UN BRAS D'ESSUIE-GLACE

(30) Priorität: 18.11.2000 DE 10057254; 27.06.2001 DE 10130903
(43) Veröffentlichungstag der Anmeldung: 27.08.2003
(73) Patentinhaber: ROBERT BOSCH GMBH, 70442 Stuttgart (DE)
(72) Erfinder: WEBER, Matthias, 76534 Baden-Baden (DE); RAPP, Harald, 77815 Buehl (DE); KRAEMER, Godelieve, 76549 Huegelsheim (DE); MAYER, Juergen, 76571 Gaggenau (DE); LEUTSCH, Wolfgang, 77830 Buehlertal (DE); BASEOTTO, Michel, B-3550 Hasselt (BE); HERINCKX, Dirk, B-3350 Linter (BE); DE BLOCK, Peter, B-3545 Halen (BE); VERELST, Hubert, B-3300 Tienen (BE); HOLSBEEKX, Philippe, B-3300 Tienen (BE); BREESCH, Frans, B-3840 Borgloon (BE); WINDMOLDERS, Eric, B-3510 Kermt (BE)
(86) Internationale Anmeldenummer: PCT/DE2001/004270
(87) Internationale Veröffentlichungsnummer: WO 2002/040328

(56) Entgegenhaltungen:
- WO-A-00/21811
- DE-A- 19 860 644
- DE-A- 19 906 288
- DE-A- 19 907 629
- DE-U- 8 522 252

## Beschreibung

### Stand der Technik

Bei Wischblättern, die anstelle des herkömmlichen Tragbügelgestells (DE-OS 15 05 397) zur Verteilung der vom Wischerarm ausgehenden Kraft zum Anlegen des Wischblatts an der Scheibe mit einem bandartigen federelastischen Tragelement ausgestattet sind, muss dieses mit Stützwänden für einen Gelenkbolzen versehen werden, wenn der Wischerarm mit seiner Kupplungshälfte oberhalb des Wischblatts endet. Der Gelenkbolzen gehört zu einer Gelenkverbindung, über welche das Wischblatt an dem Wischerarm angeschlossen werden kann.

Aus dem deutschen Gebrauchsmuster 85 22 252 ist eine Wischvorrichtung für Abdeckscheiben von Kraftfahrzeugleuchten bekannt, bei denen der Wischerarm im Querschnitt U-förmig ausgebildet und ein Adapter zum Anschließen des Wischblatts zwischen den U-Schenkeln des Wischerarms eingesetzt ist, der mit Rastnasen in Rastaussparungen der U-Schenkel greift. Der Wischerarm überdeckt so zwar kappenartig das Tragbügelgestell des Wischblatts, weist aber trotzdem von außen sichtbare Rastaussparungen auf, in die die Rastnasen des Adapters eingreifen.

Bei einer bekannten Vorrichtung der im Oberbegriff des Anspruchs 1 bezeichneten Art (WO 00/21811) greift der Wischerarm mit seiner Kupplungshälfte zwischen die beiden mit Abstand voneinander befindlichen Stützwände des Wischblatts, wenn dieses mit dem Wischerarm verbunden wird. Dadurch liegen die beiden Stützwände frei so dass die Gelenkverbindung zwischen Wischerarm und Wischblatt der Verunreinigung durch Straßenschmutz etc. schutzlos ausgesetzt ist. Diese Gelenkverbindung hat eine wichtige Funktion, weil die zu wischende, in aller Regel sphärisch gekrümmte Scheibe nicht den Abschnitt einer Kugeloberfläche darstellt, muß sich das Wischblatt während seiner Wischbewegung ständig der jeweiligen Lage und dem Verlauf der Scheibenoberfläche anpassen können. Die Gelenkverbindung muß also leichtgängig aber auch spielfrei sein, damit eine ruhige und ratterfreie Wischbewegung möglich ist. Dies ist bei der bekannten Vorrichtung jedoch nicht gewährleistet, weil der zwischen die Stützwände und die wischerarmseitige Kupplungshälfte eindringende Schmutz zur Beschädigung des Gelenks und der Wischerarmführung führt bzw. dessen Beweglichkeit beeinträchtigt. Ein weiterer Nachteil der bekannten Vorrichtung wird darin gesehen, dass die freiliegenden Stützwände einer gefälligen Formgebung der freiliegenden Teile der Wischanlage entgegenstehen. Dieser Mangel wird insbesondere bei Fahrzeugen der gehobenen Klasse vom Kunden als störend empfunden und nicht akzeptiert.

### Vorteile der Erfindung

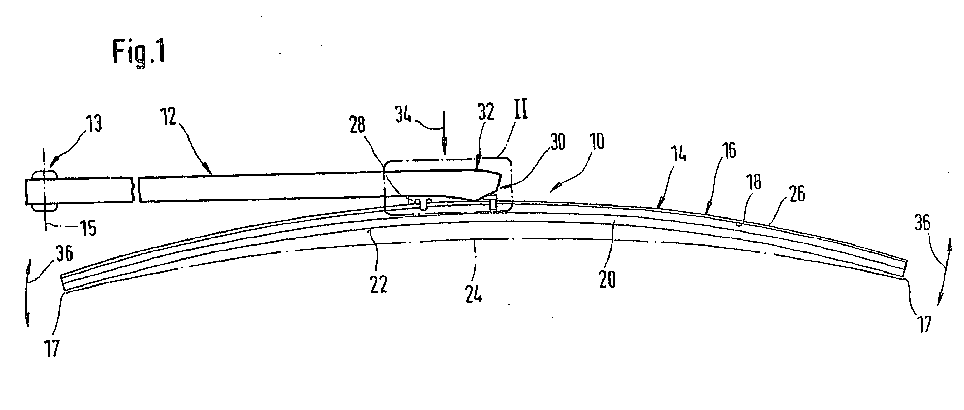

Die Verbindungsvorrichtung gemäß der Erfindung hat dem gegenüber den Vorteil, dass die wischblattseitigen Teile der Verbindungsvorrichtung zumindest weitgehend verdeckt und somit gegenüber der drohenden Verschmutzung der Gelenkverbindung und der Wischblattführung am Wischerarm geschützt sind. Weiter ist die Wischanlage frei von deren formgebende Gestalt störenden Elementen. Zwar ist es bekannt (US-PS4028770) den Wischerarm mit Wänden zu versehen, welche die Stützwände für den Gelenkbolzen eines Wischblatts außen übergreifen, doch fehlt dort eine die Wände verbindende Abdeckung für die Gelenkverbindung. Dem mag in diesem Fall möglicherweise nur geringe Bedeutung zukommen, weil der Gelenkbolzen dort nicht zur pendelbaren Lagerung eines Verbindungselements dient, sondern der Wischerarm direkt mit dem Wischblatt verbunden ist. Weiter ist dort die wischblattseitige Kupplungshälfte nicht an dem Tragelement für die Wischleiste angeordnet. Sie ist an ein weiteres Bauelement angeformt, welches seinerseits mit paarweise angeordneten, krallenartigen Fingern in seitliche Schlitze des Tragelements greift. Dadurch ergibt sich ein hochbauendes Wischblatt, welches bei den an der Scheibe herrschenden Luftströmungen insbesondere bei hohen Fahrgeschwindigkeiten zum Abheben von der Scheibe neigt, was zu einem unbefriedigenden Wischergebnis führt. Beim erfindungsgemäßen Wischblatt dagegen entfällt das zusätzliche Bauelement. Die sich so ergebende geringere Bauhöhe verbessert dessen Wirksamkeit. Bei einem Wischblatt mit einem solchen Tragelement soll dieses über das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende formgebende Krümmung des unbelasteten Tragelements - also wenn das Wischblatt nur mit seinen beiden Enden an der Scheibe anliegt (Figur 1) - werden die Enden der in Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung, weil während des Wischbetriebs die Wischleiste beziehungsweise deren an der Scheibe anliegende Wischlippe stets mit einer bestimmten Kraft gegen die Scheibe drücken muß. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397), weil das Tragelement neben der Verteilung des Anpreßdrucks auch die notwendige Querversteifung der gummielastischen Wischleiste bewirkt. Bei dem bekannten Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt. Die beiden Federschienen dieses Wischblatts sorgen in erster Linie für eine Querversteifung der Wischleiste zwischen den Krallen, wenn das Wischblatt quer zur seiner Längserstreckung über die Scheibe verschoben wird. Das Tragbügelgestell hat hier also hauptsächlich eine Tragfunktion für die Wischleiste.

Das Wischblatt lässt sich auf einfache Weise am Wischerarm anschließen, weil das Verbindungselement aus einem federelastischen Material gefertigt und mit gegen eine Rückstellkraft auslenkbaren Rastmitteln versehen ist, denen am Wischerarm angeordnete Gegenrastmittel zugeordnet sind. Eine besonders günstige Montage des Wischblatts am Wischerarm ergibt sich, weil die Rastmittel des Verbindungselements wenigstens eine in Längsrichtung des Wischblatts weisende Rastschulter haben, die mit einer ihr zugeordneten Gegenrastschulter des Wischerarms zusammen arbeitet.

Eine kostengünstige Anordnung der Stützwände wird erreicht, wenn diese durch die beiden U-Schenkel eines im Querschnitt U-förmigen Bauteils gebildet sind, das mit seiner die Schenkel verbindenden U-Basis der oberen Bandfläche des Tragelements zugewandt sich an dieser abstützt.

Um eine möglichst großflächige und damit sichere Verrastung zwischen dem Verbindungselement und dem Wischerarm zu erreichen, sind die Rastmittel des Verbindungselements durch eine an einer aus der Raststellung elastisch auslenkbaren Zunge vorhandene Schulter gebildet.

Um die Rastverbindung zwischen dem Wischblatt und dem Wischerarm gut zugänglich und damit den Wischblattwechsel besonders bedienungsfreundlich zu gestalten, ist die Zunge in einer auf der Scheibe stehenden Ebene zur Scheibe hin auslenkbar, wobei die Rastschulter an der von der Scheibe abgewandten Seite der Zunge angeordnet ist und die Gegenschulter des Wischerarms an der U-Basis des Wischerarms ausgebildet ist.

Zweckmäßig ist die elastische Zunge an der von der Scheibe abgewandten Seite der Gelenkbolzenlagerstelle und in deren Bereich am Verbindungselement angeordnet.

Eine besonders sichere, weil beidseitige Verrastung, ergibt sich, wenn in Weiterbildung der Erfindung die elastische Zunge in einer auf der Scheibe stehenden Ebene von der Scheibe weg auslenkbar ist, wenn weiter die Rastschulter quer zur Auslenkebene der Zunge aus dieser als seitlicher Vorsprung ausgebildet ist und die Gegenrastschulter des Wischerarms an dem dem Vorsprung benachbarten U-Schenkel des Wischerarms vorgesehen ist.

Eine besonders einfache Montage des Wischblatts am Wischerarm ist gegeben, wenn die Zunge an ihrer der Scheibe zugewandten Seite mit einer Anlaufschräge versehen ist, welche während der Anschließbewegung mit der Gegenrastschulter des Wischerarms zusammenwirkend die Zunge in ihre Löseposition zwingt.

Bei bestimmten Anwendungsfällen kann es von Vorteil sein, die Zunge an der der Antriebsseite des Wischerarms zugewandten Seite des Verbindungselements an diesem anzuordnen.

Eine Belastung des empfindlichen Wischgummis insbesondere dessen Wischlippe bei der Montage und der Demontage des Wischblatts am Wischerarm wird vermieden, wenn die Rastmittel an zwei einander benachbarten in einer zur Scheibe annähernd parallelen Ebene zueinander hin auslenkbaren Rastarmen als voneinander wegweisende Rasthaken ausgebildet sind, welche mit den an den U-Schenkeln des Wischerarms vorhandenen Gegenrastschulter zusammenwirken. Eine derartige Ausbildung ermöglicht ein Lösen des Wischblatts vom Wischerarm mit nur einer Hand, weil die Endrastbewegung der beiden Rasthaken aufeinander zu gerichtet ist.

Damit die Verbindung zwischen Wischerarm und Wischblatt auch in Längsrichtung des Wischerarms spielfrei bleibt, ist das Verbindungselement mit einem zur Rastschulter weisenden Montageanschlag versehen wobei der Abstand zwischen Montageanschlag und Rastschulter wenigstens so groß ist wie der Abstand zwischen der Gegenrastschulter des Wischerarms und einem von diesem abgewandten Montage-Gegenanschlag des Wischerarms.

Um die Spielfreiheit auch im Hinblick auf die bei der Fertigung der Teile unvermeidlichen Toleranzen sicherzustellen, ist das Verbindungselement mit von seiner Rastschulter weg in Längsrichtung des Wischerarms federnd ausweichbaren Mitteln versehen, die mit einer wischerarmfesten Stütze zusammenwirken.

Zweckmäßig sind diese federnd ausweichbaren Mitteln durch am Montageanschlag des Verbindungselements angeordnete Federzungen gebildet.

Wenn die Gegenrastschultern des Wischerarms durch vorzugsweise an den U-Schenkeln des Wischerarms paarweise angeordnete, aufeinanderzu gerichtete Vorsprünge gebildet sind, bleiben diese bei der Betrachtung der Verbindungsvorrichtung unsichtbar und bilden im Umgang mit der Wischvorrichtung kein Verletzungsrisiko.

Damit das Wischblatt mit seinem Verbindungselement auf einfache Weise an den Wischerarm angeschlossen werden kann, sind den Vorsprüngen des Wischerarms an den Seitenwangen des Verbindungselements angeordnete Durchführkanäle zugeordnet.

Um eine betriebssichere Fixierung des Verbindungselements am Wischerarm der Wischvorrichtung zu gewährleisten sind am freien Ende des Wischerarms Mittel zum Sichern des Verbindungselements in dessen Betriebsstellung angeordnet.

Diese Betriebsstellung wird besonders gut gesichert, wenn sich die Vorsprünge des Wischerarms bezogen auf den Gelenkbolzen des Wischblatts an der der Antriebsseite des Wischerarms zugewandten Seite befinden, weil dann ein maximaler Abstand zwischen den Sicherungsmitteln und den Rast- beziehungsweise Gegenrastmitteln erreicht ist.

Wenn die beiden Stützwände je eine Querbohrung aufweisen, deren Durchmesser auf den Durchmesser des Gelenkbolzens abgestimmt ist und deren Achsen miteinander fluchten, ist das Verbindungselement unverlierbar in seiner vom Fachmann montierten vorschriftsmäßigen Lage am Wischblatt angeordnet. Dadurch werden Montagefehler durch den Endverbraucher vermieden.

Wenn weiter die wischblattseitige Kupplungshälfte an der von der Scheibe abgewandten oberen, in Längsrichtung gekrümmten Bandfläche des bandartig langgestreckten, federelastischen Tragelements gehalten ist, wobei es wenigstens über einen Teilabschnitt flächig an dieser anliegt und weiter an der der Scheibe zugewandten unteren, konkaven Bandfläche des Tragelements eine an der Scheibe anlegbare gummielastische Wischleiste längsachsenparallel angeordnet ist, ergibt sich ein besonders niedrig und leicht bauendes, zum Wischhebel gehörendes Wischblatt. Dies gilt auch dann, wenn zwischen der wischblattseitigen Kupplungshälfte und dem Tragelement - anstelle der flächigen Anlage - zumindest eine linien- oder punktförmige Abstützung vorgesehen ist.

Weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

In der Zeichnung zeigen:
Figur 1 eine unmaßstäbliche Seitenansicht einer mit der erfindungsgemäßen Verbindungsvorrichtung ausgestatteten Wischvorrichtung mit einem an einem Wischerarm angelenkten Wischblatt,
Figur 2 eine in Figur 1 mit II bezeichnete Einzelheit der Wischvorrichtung mit dem freien Ende des Wischerarms und einer zur wischblattseitigen Kupplungshälfte zum Verbinden des Wischblatts mit dem Wischerarm gehörenden Bauteils in vergrößerter Darstellung,
Figur 3 das Ende des Wischerarms gemäß Figur 2 in perspektivischer, teilweise geschnittener Darstellung,
Figur 4 eine perspektivische Darstellung des Bauteils gemäß Figur 2,
Figur 5 ein zur wischblattseitigen Kupplungshälfte gehörendes Verbindungselement in perspektivischer Darstellung,
Figur 6 eine Draufsicht auf die Anordnung gemäß Figur 2,
Figur 7 einen Längsschnitt entlang der Linie VII-VII durch die Anordnung gemäß Figur 6,
Figur 8 die Fläche eines Querschnitts entlang der Linie VIII-VIII durch die Anordnung gemäß Figur 6 um 90° gedreht,
Figur 9 die Querschnittsfläche eines Schnitts entlang der Linie IX-IX durch die Anordnung gemäß Figur 6 um 90° gedreht,
Figur 10 die Querschnittsfläche eines Schnitts entlang der Linie X-X durch die Anordnung gemäß Figur 6 um 90° gedreht,
Figur 11 eine der Figur 2 entsprechende Einzelheit einer anderen Ausführungsform der Verbindungsvorrichtung,
Figur 12 das freie Ende des Wischerarms gemäß Figur 11 in perspektivischer, teilweise geschnittener Darstellung,
Figur 13 eine perspektivische Darstellung des Bauteils gemäß Figur 11,
Figur 14 das zur Ausführungsform gemäß Figur 11 erforderliche, zur wischblattseitigen Kupplungshälfte gehörende Verbindungselement in perspektivischer Darstellung, teilweise geschnitten,
Figur 15 eine Draufsicht auf den Wischerarm gemäß Figur 11,
Figur 16 einen Längsschnitt entlang der Linie XVI-XVI durch die Anordnung gemäß Figur 15,
Figur 17 einen Längsschnitt entlang der Linie XVII-XVII durch die Anordnung gemäß Figur 15,
Figur 18 die Querschnittsfläche eines Schnitts entlang der Linie XVIII-XVIII durch die Anordnung gemäß Figur 15 um 90° gedreht,
Figur 19 die Querschnittsfläche eines Schnitts entlang der Linie XIX-XIX durch die Anordnung gemäß Figur 15 um 90° gedreht,
Figur 20 eine andere Ausführungsform eines zur Verbindungsvorrichtung gemäß Figur 11 gehörenden Verbindungselement in perspektivischer Darstellung,
Figur 21 die Querschnittsfläche entsprechend Figur 18 durch eine mit dem Verbindungselement gemäß Figur 20 ausgestattete Wischvorrichtung,
Figuren 22 bis 24 schematische Darstellungen der zum Verbinden des Wischblatts mit dem Wischerarm erforderlichen Montageschritte bei der Verbindungsvorrichtung gemäß den Figuren 2 bis 5 und die
Figuren 25 und 26 die erforderlichen Montageschritte zum Verbinden des Wischblatts mit dem Wischerarm bei der Verbindungsvorrichtung gemäß den Figuren 11 bis 14 in schematischer Darstellung.

### Beschreibung der Ausführungsbeispiele

In Figur 1 ist in Seitenansicht eine Wischhebel 10 dargestellt, zu dem ein angetriebener Wischerarm 12 und ein mit diesem gelenkig verbundenes Wischblatt 14 gehören. Der Wischerarm 12 ist an seinem einen Ende 13 mit einer nicht dargestellten Pendel-Antriebsvorrichtung verbunden, deren Pendelachse mit der Bezugszahl 15 versehen ist. An dem anderen, freien Ende des Wischerarms 12 ist das Wischblatt 14 angelenkt. Es weist ein federelastisches, bandartig langgestrecktes, ein- oder mehrteiliges Tragelement 16 auf, an dessen von dem Wischerarm abgewandten unteren Bandseite 18 eine langgestreckte, gummielastische Wischleiste 20 längsachsenparallel angeordnet ist. Das Wischblatt 14 ist mit einer an der Wischleiste 20 vorhandenen Wischlippe 22 an der Oberfläche 24 der zu wischenden Scheibe anlegbar. In Figur 1 ist die Oberfläche 24 dieser Scheibe als strichpunktierte Linie eingezeichnet. Es handelt sich dabei um die in aller Regel sphärisch gekrümmte Windschutzscheibe eines Kraftfahrzeuges. An der von dieser Scheibenoberfläche 24 abgewandten oberen Bandseite 26 des Tragelements 16 ist das Wischblatt 14 mit der wischblattseitigen Kupplungshälfte 28 einer Verbindungsvorrichtung 30 versehen, welche mit einer am freien Ende des Wischerarms 12 ausgebildeten wischerarmseitigen Kupplungshälfte 32 zusammenarbeitet. Wie aus Figur 1 weiter ersichtlich ist, hat das noch nicht an der Scheibe angelegte, gekrümmte Wischblatt 14 eine stärkere Krümmung als die Scheibenoberfläche 24. Da die Linie 24 die stärkste Krümmung der Scheibenoberfläche darstellen soll ist klar ersichtlich, dass die Krümmung des mit seinen beiden Enden 17 an der Scheibe anliegenden, noch unbelasteten Wischblatts 14 stärker ist als die maximale Scheibenkrümmung. Unter einem über dem Wischerarm 12 ausgeübten, in Richtung des Pfeiles 34 (Figur 1) wirkenden Anpreßdrucks legt sich das Wischblatt 14 mit seiner Wischleiste beziehungsweise mit deren Wischlippe 22 über ihre gesamte Länge an der Scheibenoberfläche 24 an. Dabei baut sich im aus Metall gefertigten, federelastischen Tragelement 16 eine Spannung auf, welche für eine ordnungsgemäße Anlage der Wischleiste 20 über deren gesamte Länge an der Scheibe 24 sorgt. Weil die in aller Regel sphärisch gekrümmte Scheibe nicht einen Abschnitt einer Kugeloberfläche darstellt, muß sich das Wischblatt 14 gegenüber dem Wischerarm 12 während seiner Wischbewegung ständig der jeweiligen Lage und dem Verlauf der Scheibenoberfläche anpassen können. Deshalb ist die eine Schwingbewegung (Doppelpfeil 36) ermöglichende, leicht gängige Gelenkverbindung zwischen dem Wischerarm 12 und dem Wischblatt 14 notwendig.

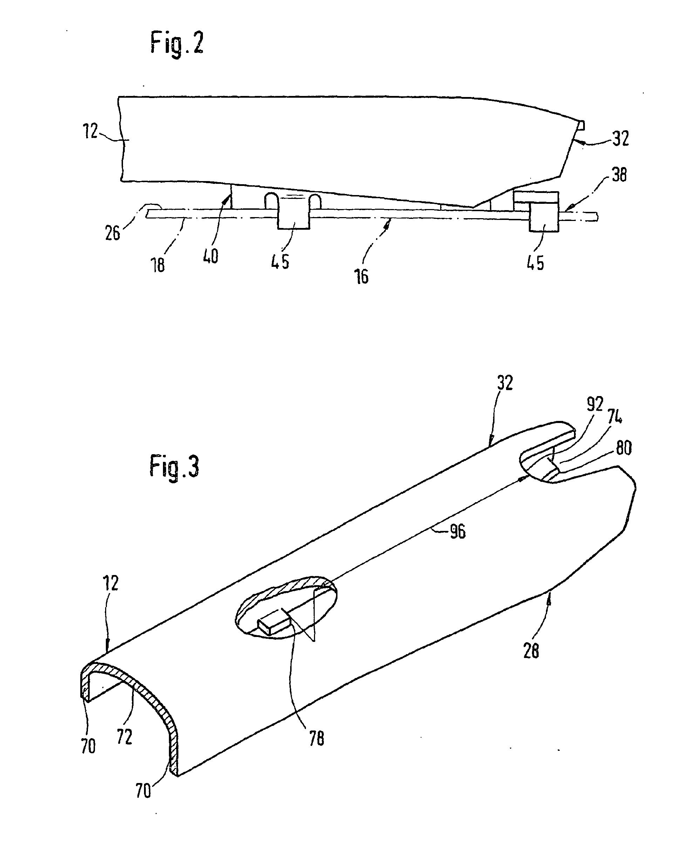

Im Folgenden soll eine erste Ausführungsform einer solchen mit einem Gelenk versehenen Verbindungsvorrichtung 30 anhand der Figuren 2 bis 10 näher erläutert werden. Bei diesen Figuren ist auf die detaillierte Darstellung des Wischblatts verzichtet worden. Zum besseren Verständnis der Erfindung zeigen die Figuren 2, 4, 6 und 7 jedoch das Tragelement 16 des Wischblatts in strichpunktierter Ausführung. Dieses Tragelement 16 weist beim Ausführungsbeispiel zwei parallele und mit Abstand voneinander angeordnete in einer gemeinsamen Ebene befindliche Federschienen 38 auf, an deren oberen Bandseite 26 ein zur wischblattseitigen Kupplungshälfte 28 gehörendes, im Querschnitt U-förmiges Bauteil 40 angeordnet ist. Die Anordnung des Bauteils 40 an der oberen Bandseite 26 der Federschienen 38 ist so getroffen, dass eine die beiden, in Längsrichtung des Wischblatts 14 ausgerichteten U-Schenkel 42 des Bauteils 40 verbindende U-Basis 44 der oberen Bandseite 26 des Tragelements 16 zugewandt ist und sich an dieser abstützt. Beim Ausführungsbeispiel umgreifen am Bauteil 40 vorhandene Krallen 45 die voneinander abgewandten Außenkanten 39 der Federschienen 38.

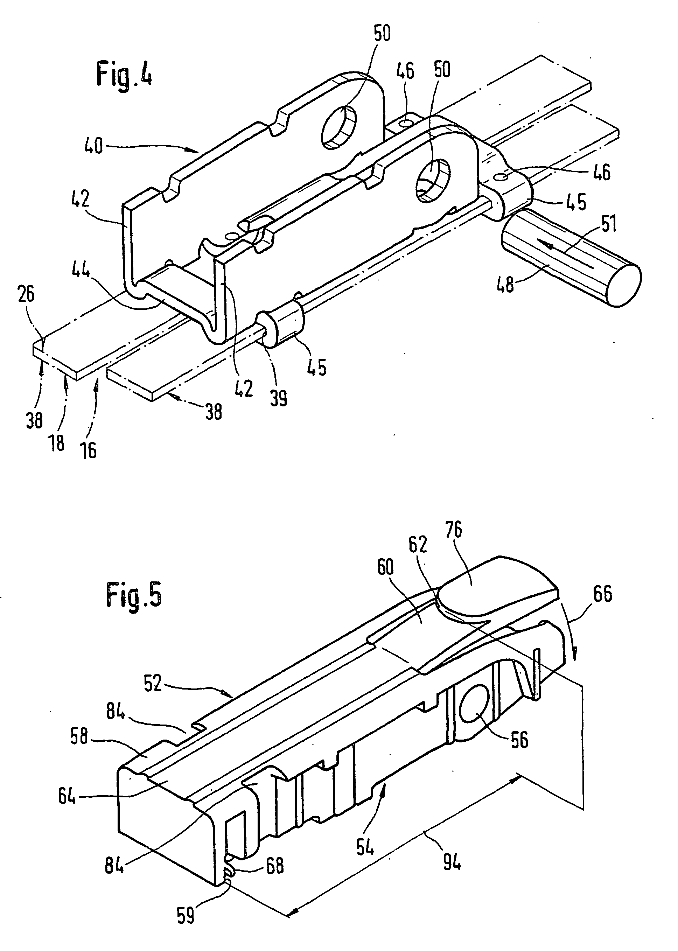

Zur Sicherung in Längsrichtung der Federschienen 38 ist das Bauteil 40 mit diesem verschweißt. In Figur 4 sind diese Schweißstellen mit der Bezugszahl 46 versehen worden. Die beiden U-Schenkel 42 des Bauteils 40 bilden Stützwände für einen Gelenkbolzen 48 (Figur 4) dem miteinander fluchtende Aufnahmebohrungen 50 in den beiden U-Schenkeln 42 zugeordnet sind. Die Abstimmungen zwischen dem Durchmesser des Gelenkbolzens 48 und dem Durchmesser der beiden Bohrungen 50 ist so getroffen, dass das Bauteil 40 ohne Kraftaufwand um die Längsachse des Gelenkbolzens 48 geschwenkt werden kann, wenn er in Richtung des Pfeiles 51 in die Bohrungen 50 eingebracht worden ist.

Neben dem Bauteil 40 gehört zur wischblattseitigen Kupplungshälfte 28 noch ein Verbindungselement 52 (Figur 5). Das Verbindungselement 52 ist aus einem elastischen Kunststoff gefertigt und hat einen Grundkörper 54. Der Grundkörper 54 ist mit einer Querbohrung 56 versehen, deren Durchmesser so auf den Durchmesser des Gelenkbolzens 48 abgestimmt ist, dass der Bolzen 48 mit einem leichten Preßsitz in dem Verbindungselement 52 gehalten ist. Weiter ist die in Richtung der Gelenkachse gemessene Breite des Verbindungselement 52 so auf den Abstand zwischen den beiden Stützwänden 42 abgestimmt, dass es sich ohne Kraftaufwand um die Längsachse 49 der Gelenkaugen 50 schwenken läßt (Doppelpfeil 36, Fig. 1), wenn das Verbindungselement 52 in der aus Figur 8 ersichtlichen Weise mit dem Bauteil 40 gelenkig verbunden worden ist.

Es ist jedoch auch denkbar, den Bolzen 48 drehfest in den Gelenkaugen 50 zu halten und eine Drehbewegung zwischen dem Bolzen 48 und dem Verbindungselement 52 zuzulassen. Solange der Bolzen 48 axial gesichert wird wäre sogar eine Drehbewegung gegenüber dem Verbindungselement 52 und den Gelenkaugen vorstellbar.

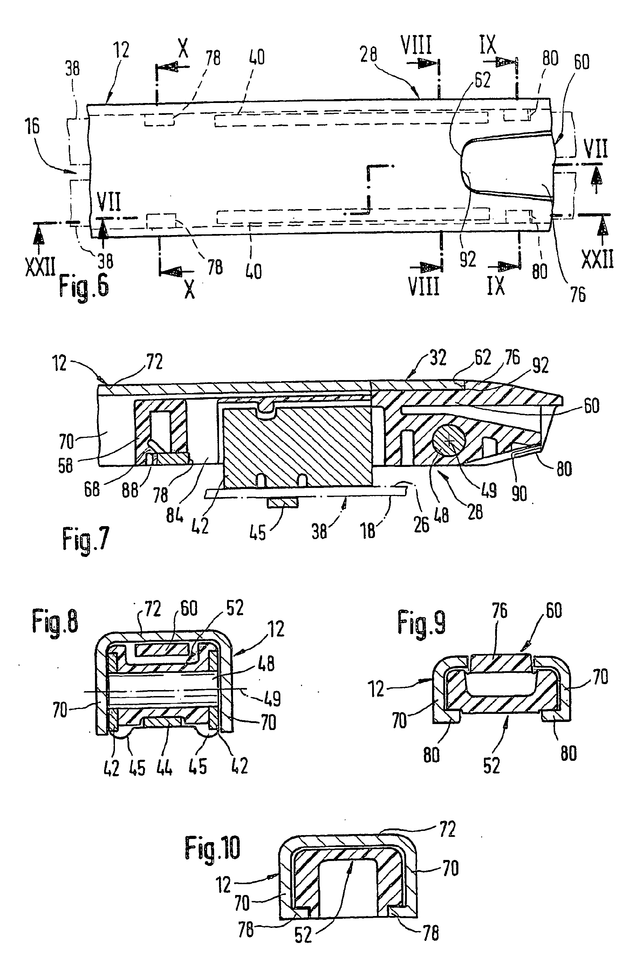

Weiter zeigt insbesondere Figur 7, dass das Verbindungselement 52 mit einem dem Antriebsende 13 des Wischerarms 12 zugewandten Endabschnitt 58 aus dem Bauteil 40 ragt. Die Breite dieses Endabschnitts entspricht etwa der Breite des Bauteils 40 über die beiden voneinander abgewandten Außenseiten der Stützwände 42 gemessen. Weiter ist das Verbindungselement 52 im Bereich der Quer- oder Lagerbohrung 56 für den Gelenkbolzen 48 an seiner von der Scheibe 24 abgewandten Oberseite und im Bereich der Gelenkbolzenlagerstelle 56 mit einer in einer auf der Scheibe stehenden Ebene zur Scheibe hin auslenkbaren Zunge 60 versehen. An der von der Scheibe abgewandten Seite ist an der Zunge eine in Längsrichtung des Wischblatts weisende Rastschulter 62 angeordnet, die bei diesem Ausführungsbeispiel zum Endabschnitt 58 des Verbindungselements 52 weist. In unbelastetem Zustand verläuft die Zunge 60 von der Oberseite 64 des Verbindungselements 52 aus zur Rastschulter 62 so, dass diese oberhalb der Oberseite 64 liegt. In Figur 5 zeigt ein Pfeil 66 die Auslenkrichtung an, in welche die Zunge gegen eine Rückstellkraft bewegt werden kann. An der der Rastschulter 62 zugewandten Seite des Endabschnitts 58 sind an diesen Federzungen 68 ausgebildet. Die Anordnung der Federzungen 68 ist dabei so getroffen, dass sie von der Rastschulter 62 aus weg in Längsrichtung federnd ausweichbar sind. Wenn das Verbindungselement 52 in der beschriebenen Weise mit dem Bauteil 40 beziehungsweise mit dem Wischblatt 14 gelenkig verbunden ist, bildet dieses zusammen mit dem Bauteil 40 die wischblattseitige Kupplungshälfte 28 zum Anschließen des Wischblatts 14 am freien Ende des Wischerarms 12.

Anhand von Figur 3 soll im Folgenden die wischerarmseitige Kupplungshälfte 32 beschrieben werden. Der Wischerarm 12 hat zumindest an seinem freien Ende einen im wesentlichen U-förmigen Querschnitt. Er hat somit zwei zueinander parallele Armschenkel 70, die über eine stegartige Wand 72 miteinander verbunden sind. Am freien Ende des Wischerarms 12 ist dieser von seiner Stirnseite her mit einer randoffenen Aussparung 74 versehen, deren Kontur im wesentlichen der Kontur einer Verdickung 76 der Zunge 60 des Verbindungselements 52 entspricht, an welcher die Rastschulter 62 ausgebildet ist.

Mit Abstand von der Aussparung 74 sind an den Armschenkeln - bezogen auf den Gelenkbolzen 48 des Wischblatts - an der der Antriebsseite 13 zugewandten Seite 70 des Wischerarms 12 einander gegenüberliegend und auf einander zugerichtete Vorsprünge 78 vorhanden, welche lappenartig aus den Armschenkeln 70 herausragen (Fig. 3 und 10). Im Bereich seines freien Endes beziehungsweise im Bereich der Aussparung 74 ist ein weiteres Paar solcher lappenartiger Vorsprünge 80 an den Armschenkeln 70 angeordnet (Fig. 3 und 9).

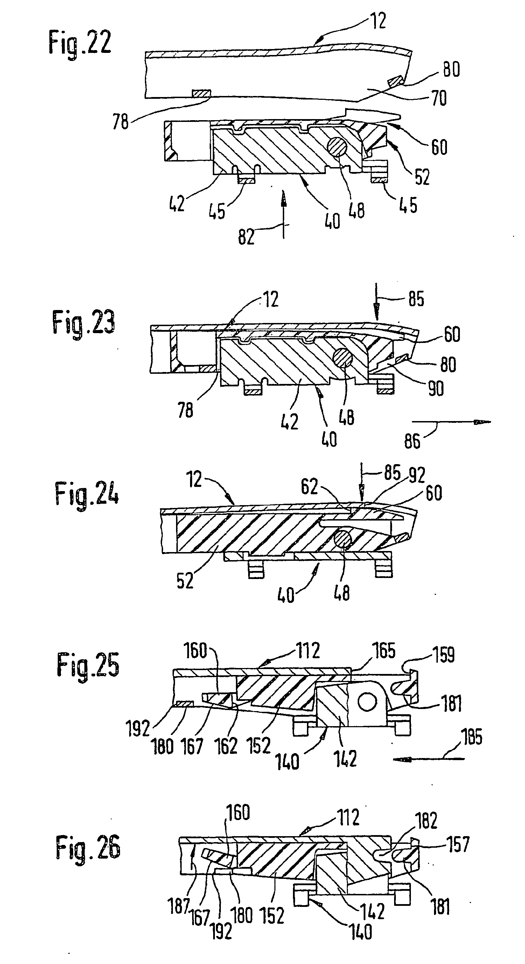

Zur Befestigung des Wischblatts am Wischerarm werden diese beiden Wischvorrichtungsteile zueinander in eine Position gebracht, die in Figur 22 schematisch dargestellt ist. Danach wird das Wischblatt in Richtung des Pfeiles 82 bewegt, so dass das mit dem Verbindungselement 52 versehene Bauteil 40 mit seinen Stützwänden 42 zwischen die Armschenkel 70 des Wischerarms 12 gelangt. Damit dies möglich ist, sind den Vorsprüngen 78 des Wischerarms entsprechend dimensionierte und ausgerichtete Durchtrittskanäle 84 am Verbindungselement 52 zugeordnet. Es wird dann die in den Figuren 23 und 24 dargestellte Zwischen-Montageposition erhalten. In dieser Zwischenposition (Fig. 23) wird die Zunge 60 des Verbindungselement 52 in Richtung des Pfeils 85 ausgelenkt und damit gespannt. Danach muß das Wischblatt in Richtung des Pfeiles 86 zum freien Ende des Wischerarms hin bewegt werden, wobei die Vorsprünge 78 des Wischerarms in Rastnischen 88 des Verbindungselements 52 gelangen (Figur 7), welche ein Lösen des Wischblatts vom Wischerarm quer zu dessen Längserstreckung verhindern. Gleichzeitig schieben sich entsprechende Rastnischen 90 des Verbindungselement 52 über die lappenartigen Vorsprünge 80 am freien Ende des Wischerarms 12. Auf diese Weise ist das Verbindungselement in einer exakt definierten Betriebsstellung am Wischerarm 12 arretiert, zumal in der nun erreichten Position die Zunge 60 mit ihrer Rastschulter 62 entgegen dem Pfeil 66 (Figur 5) unter der gespeicherten Rückstellkraft zurückfedert, wobei die Rastschulter 62 eine ihr passend zugeordnete Gegenrastschulter 92 an der Aussparung 74 des Wischerams 12 passend hintergreift. Dadurch wird zuverlässig eine entgegen dem Pfeil 86 gerichtete Lösebewegung verhindert. Das Wischblatt 14 ist nun mit seiner Rastschulter 62 und mit seinen am Endabschnitt 58 vorhandenen, überstehenden Montageanschlägen 59 zwischen der Gegenrastschulter 92 und den als Liegen-Montageanschlägen wirkenden Vorsprüngen 78 sicher fixiert. Dies erfordert eine sorgfältige Abstimmung des Abstands 94 zwischen der Rastschulter 62 und den Montageanschlägen 59 (Fig. 5) auf den Abstand 96 zwischen den Vorsprüngen 78 und der Gegenrastschulter 92 (Fig. 3). In der dargestellten Betriebsstellung (Fig. 1, 2 und 7) übergreifen die Armschenkel 70 die Stützwände 42 und damit auch die Lagerbohrungen 50 für den Gelenkbolzen 48, so dass dieser gegen Längsverschiebung gesichert ist. Schließlich sei noch erwähnt, dass in dieser in Figur 7 dargestellten Betriebsstellung die Vorsprünge 78 die Federzungen 68 geringfügig zur Pendelachse 15 hin gespannt haben, so dass unvermeidliche Fertigungstoleranzen nicht zu Längsspiel zwischen Wischerarm 12 und Wischblatt 14 führen können.

Dadurch, dass der Wischerarm im Bereich seiner Kupplungshälfte 32 U-förmig ausgebildet ist, wobei die als stegartige Wand 72 ausgebildete U-Basis die Stützwände 42 der wischblattseitigen Kupplungshälfte abdecken und darüber hinaus sich die U-Schenkel oder Armschenkel 70 des Wischerarms die Außenseiten der Stützwände überdeckend zum Tragelement 16 hin erstrecken, ergibt sich ein optimaler Schutz der die Gelenkverbindung zwischen Wischerarm und Wischblatt bewirkenden Bauelemente. Dies ist insbesonders aus Figur 2 zu entnehmen.

Zur Demontage des Wischblatts 14 vom Wischerarm 12 wird die Zunge 60 in Richtung des Pfeiles 66 soweit ausgelenkt, dass Rastschulter 62 und Gegenrastschulter 92 außer Eingriff gelangen. Danach erfolgt das Lösen des Wischblatts vom Wischerarm entgegen der Richtung der Pfeile 76 und 82 (Fig. 22, 23, 24) in dieser Reihenfolge.

Es ist auch denkbar den Gelenkbolzen mittels eines Preßsitzes in den Stützwänden 42 zu halten. Für den Wischblattwechsel ist es allerdings dann nötig, die Querbohrung des Verbindungselements mit einem zu dessen Unterseite hin offenen Einführkanal zu versehen, so dass das Verbindungselement vom Gelenkbolzen abnehmbar bzw. auf diesen aufrastbar ist.

Die vorstehenden Ausführungen machen deutlich, dass der Wischerarm 12 im Bereich seiner Kupplungshälfte 32 U-förmig ausgebildet ist, dass die die beiden U-Schenkel 70 verbindende U-Basis 72 die Stützwände 42 des Bauteils 40 abdeckt und dass sich die beiden U - oder Armschenkel 70 - die Außenseiten der Stützwände abdeckend zum Tragelement 16 hin erstrecken.

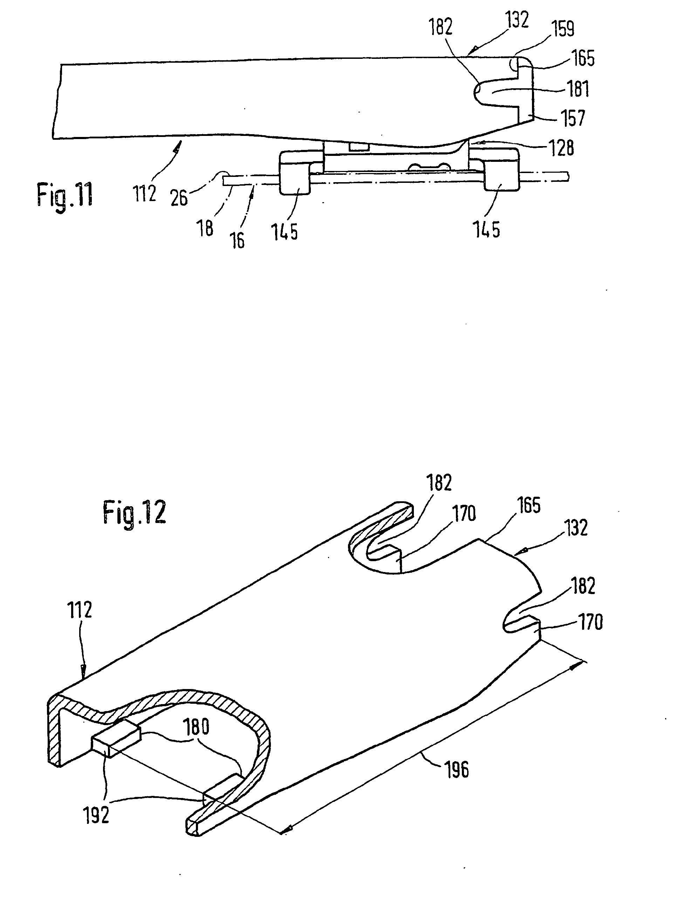

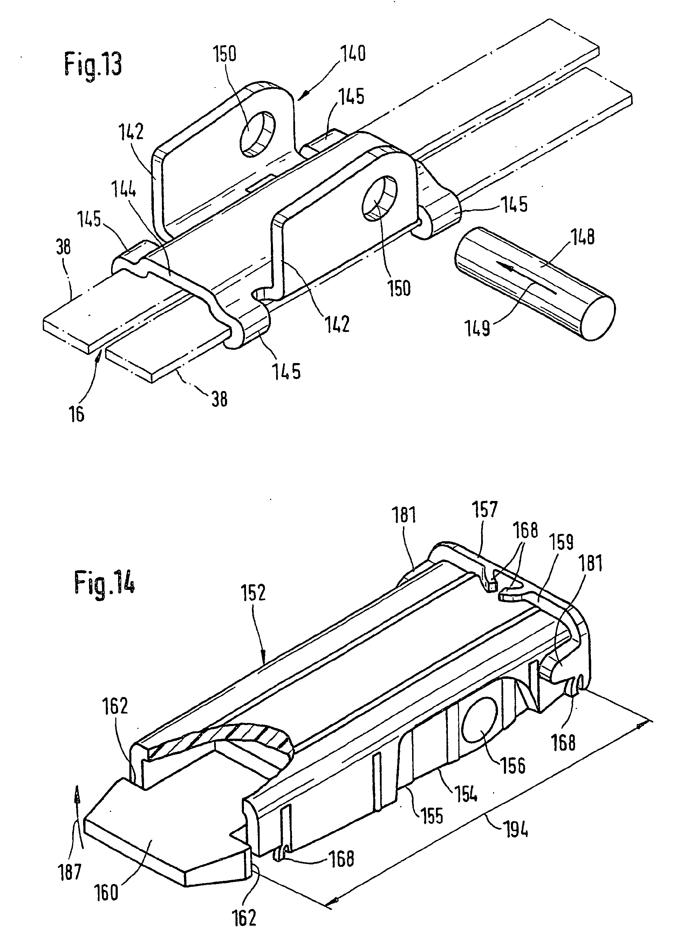

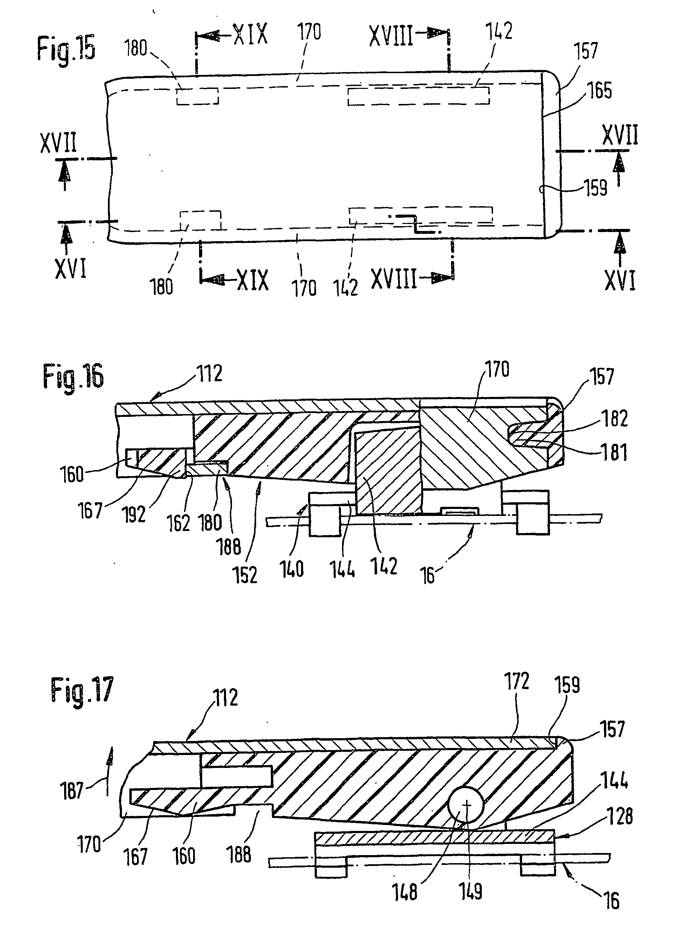

Eine andere Ausführungsform der erfindungsgemäßen Verbindungsvorrichtung ist in den Figuren 11 bis 19 dargestellt. Figur 13 zeigt eine der Figur 4 entsprechende Darstellung eines mit den zwei Federschienen 38 eines Tragelements 16 verbundene, im Querschnitt im wesentlichen U-förmiges Bauteil 140, welches ebenfalls mit Krallen 145 die Außenseite des Tragelements 16 umgreifend mit diesen verbunden ist. Auch in diesem Fall kann eine Verschweißung des Bauelements 140 mit dem Tragelement 16 zweckdienlich sein. Die U-Schenkel 142 des Bauteils 40 erstrecken sich von der sich am Tragelement 16 abstützenden U-Basis 144 aus vom Tragelement weg. Auch hier sind in den beiden sich in Längsrichtung des Wischblatts erstreckenden Stützwänden 142 miteinander fluchtende Aufnahmebohrungen 150 für einen Gelenkbolzen 148 angeordnet, der in Richtung des Pfeiles 149 in der schon beschriebenen Weise in die ihm zugeordneten Aufnahmebohrungen 150 eingebracht werden kann. Zur wischblattseitigen Kupplungshälfte gehört ferner ein in Figur 14 dargestelltes Verbindungselement 152, das ebenfalls aus einem elastischen Kunststoff hergestellt ist. Es hat einen Grundkörper 154, der an seinen beiden Seiten je eine nischenartige Aussparung 155 aufweist, die so bemessen ist, dass das Verbindungselement 152 in diesem Bereich spiellos zwischen die beiden Stützwände 142 eingeführt werden und entsprechend der Forderung seine Pendelbewegung (Doppelpfeil 36) ausführen kann. Weiter ist das Verbindungselement 152 in diesem Bereich mit einer Querbohrung 156 versehen, die ebenso wie die Querbohrung 56 bei der schon erläuterten Ausführungsform der Erfindung entsprechend auf den Durchmesser des Gelenkbolzens 148 bzw. 48 abgestimmt ist. Bezogen auf die Quer- oder Lagerbohrung 156 hat das Verbindungselement 152 an seinem einen Ende eine Endwand 157, welche über die Oberseite des Verbindungselement und auch über die beiden seitlichen Wände des Verbindungselement 152 hinausragt. Am anderen Längsende des Verbindungselement 152 ist dieses mit einer federnd gegen eine Rückstellkraft in einer auf der Scheibe stehenden Ebene auslenkbaren Zunge 160 versehen, die an ihren beiden einander gegenüberliegenden Querseiten je eine hakenartig vorspringende, in Längsrichtung des Wischblatts weisende, Rastschulter 162 aufweist. Das Verbindungselement 152 bildet zusammen mit dem Bauteil 140 die wischblattseitige Kupplungshälfte 128, der eine in Figur 12 dargestellte wischerarmseitige Kupplungshälfte 132 zugeordnet ist.

Die wischerarmseitige Kupplungshälfte 132 umfaßt ein ebenfalls im Querschnitt im wesentlichen U-förmiges Endstück des Wischerarms 112 bei dem der Abstand der Armschenkel 170 voneinander größer ist als der Abstand der beiden Außenwände der Stützwände 142 des Bauteils 140. Mit Abstand von der stirnseitigen Endwand des Wischerarms 112 sind an den Armschenkeln 170 ebenfalls jeweils ein lappenartiger Vorsprung 180 angeordnet. Die beiden lappenartigen Vorsprünge 180 liegen einander gegenüber und erstrecken sich aufeinander zu. Die hakenartigen Rastschultern 162 der an der der Antriebsseite des Wischerarms zugewandten Seite des Verbindungselements angeordnete Zunge 160 erstrecken sich nicht über das Breitenmaß des Verbindungselements 152 hinaus.

Wenn das Verbindungselement 152 in der schon angedeuteten Weise zwischen die Stützwände 142 des Bauteils 140 eingesetzt und mit Hilfe des Gelenkbolzens 148 gelenkig gelagert ist, kann das Wischblatt mit dem Wischerarm 112 verbunden werden. Dazu wird das Wischblatt 14 in eine Position zum Wischerarm 12 gebracht, die in Figur 25 dargestellt ist. Ein wesentlicher Vorteil dieser Ausführungsform ist darin zu sehen, dass zum Anschließen des Wischblatts beziehungsweise zur Vorbereitung des Anschlußvorgangs der Wischerarm nicht oder nur geringfügig angehoben werden muß. Aus der in Figur 25 angedeuteten Vormontageposition wird das Wischblatt nun in Richtung des Pfeiles 185 verschoben. Dabei läuft die Federzungen 160 mit einer an ihrer der Scheibe zugewandten Unterseite ausgebildeten Anlaufschräge 167 (Figur 16) gegen die lappenartige Vorsprünge 180 des Wischerarms 112 und wird dabei in Richtung des Pfeiles 187 (Figur 17 und 26) unter steigender Rückstellkraft nach oben in eine Löseposition ausgelenkt. Wenn nun das Wischblatt weiter in Richtung des Pfeiles 185 verschoben wird, gelangt die Federzunge schließlich mit ihren Rastschultern 162 hinter die lappenartige Vorsprünge 180 und federt dann unter der durch den Auslenkvorgang gespeicherten Rückstellkraft entgegen dem Pfeil 187 zurück, so dass die in Figur 16 dargestellte Rastposition erreicht ist. Dabei liegt jede Rastschulter 162 der Zunge 160 an einer Gegenrastschulter 192 an, welche an der ihr zugewandten Seite der lappenartige Vorsprünge 180 ausgebildet ist. Gleichzeitig liegt ein an der Endwand 157 des Verbindungselements 152 vorhandener Montageanschlag 159 an der als Montage-Gegenanschlag wirkenden stirnseitigen Endwand 165 - gebildet durch die Stirnflächen der Armschenkel 170 und der diese Schenkel verbindenden stegartigen Wand 172 - des Wischerarms 112 an. Zum Ausgleich von Fertigungstoleranzen sind in Fig. 14 mehrere Ausführungsformen von Federzungen 168 dargestellt, welche jeweils mit einer wischerarmfesten Stütze zusammenarbeiten. Diese Stütze kann beispielsweise durch die stirnseitige Endwand 165 oder durch die lappenartige Vorsprünge 180 des Wischerarms gebildet sein. Wie insbesondere aus Figur 16 ersichtlich ist, liegen die lappenartige Vorsprünge 180 des Wischerarms 112 in einer Rastnische 188 des Verbindungselements 152. Zur zuverlässigen Sicherung des Verbindungselements am Wischerarm während des Wischbetriebs ist das Verbindungselement 152 im Bereich seiner Endwand mit nasenartigen Vorsprüngen 181 versehen, denen entsprechend ausgeformte, randoffene Aussparungen 182 in den Armschenkeln 170 zugeordnet sind. Während des Montagevorgangs (Figuren 25 und 26) greifen diese nasenartigen Vorsprünge 181 passend in die ihnen zugeordnete Aussparungen 182 und fixieren das Verbindungselement 152 an der wischerarmseitigen Kupplungshälfte 132 (Figur 16). Die Aussparungen 155 in den Seitenwänden des Verbindungselements 152 sind so bemessen, dass dieses - zusammen mit dem Wischblatt um einen bestimmtem, erforderlichen Winkel um die Achse 149 des Gelenkbolzens 148 pendeln kann. Diese Pendelbewegung ist in Figur 1 durch die Doppelpfeile 36 angedeutet.

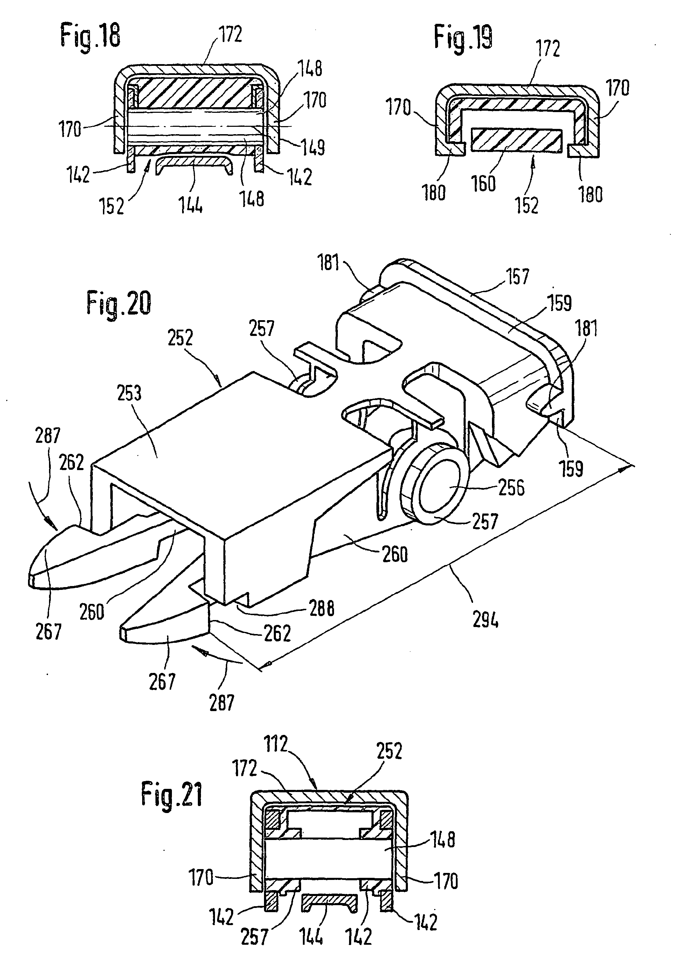

Eine weitere Ausführungsform des Verbindungselements ist in den Figuren 20 und 21 dargestellt. Dieses Verbindungselement 252 entspricht im wesentlichen dem Verbindungselement 152, jedoch hat es einen etwa U-förmigen Querschnitt und ist zumindest im Bereich seiner Querbohrung 256 mit buchsenartigen Lageraugen 257 versehen. An die Lageraugen sind hebelartige Schenkel 260 angeformt, die sich von der Endwand 157 wegerstrecken. Die hebelartigen Schenkel 260 treten aus dem Körper 253 des Verbindungselements 252 heraus und sind mit hakenartigen, in Längsrichtung des Wischblatts weisenden Rastschultern 262 versehen, welche den Lageraugen 257 zugewandt sind. Die Rastschultern 262 erstrecken sich im wesentlichen parallel zur Achse der beiden Lagerbohrungen 256. Die Ausbildung der Federschenkel 260 ist so getroffen, dass diese in Richtung der beiden Pfeile 287 aufeinander zu aus ihrer dargestellten Ruheposition gegen eine Rückstellkraft ausgelenkt werden können. Weiter sind die freien Enden dieser Schenkel 260 mit Anlaufschrägen 267 versehen.

Wenn das Verbindungselement 252 in der bei den anderen Ausführungsbeispielen schon beschriebenen Weise mit dem Bauteil 140 gelenkig verbunden ist, kann das Wischblatt ausgehend von einer Position gemäß Figur 25 mit dem Wischerarm verbunden werden. Wenn das Wischblatt in Richtung des Pfeiles 185 bewegt wird, schlagen die beiden Anlaufschrägen der Schenkel 260 an den lappenartigen Vorsprüngen des Wischerarms 180 an. Dadurch werden die Schenkel 260 in Richtung der Pfeile 287 nach innen entgegen der Rückstellkraft ausgelenkt, bis das Wischblatt die in Figur 16 gezeigt Position erreicht hat. Dies ist dann der Fall, wenn die der stirnseitigen Endwand 165 des Wischerarms zugewandte, als Montageanschlag 159 dienende Wandfläche der Endwand 157 am Wischerarm anschlägt. In dieser Position befinden sich dann die lappenartigen Vorsprünge 180 des Wischerarms ebenfalls in Rastnischen 288, welche am Verbindungselement 252 vorgesehen und durch die dann zurückgestellten Rastschultern 262 begrenzt sind. Auch bei diesen Ausführungsformen ist der Wischerarm im Bereich seiner Kupplungshälfte U-förmig ausgebildet. Die als stegartige Wand 172 bezeichnete U-Basis deckt auch hier die Stützwände 142 ab und die beiden als Armschenkel 170 bezeichneten U-Schenkel des Wischerarms 112 erstrecken sich die Stützwände 142 überdeckend zum Tragelement 16 hin.

Dazu ist auch hier eine genaue Abstimmung der Abstände 194 bzw. 294 zwischen Rastschulter 162 bzw. 262 und Montageanschlag 159 zwischen den Vorsprüngen 180, 192 und dem Gegen-Montageanschlag 192 erforderlich.

Zur Demontage wird bei der Ausführungsform gemäß den Fig. 11 bis 19 das Wischblatt 14 entrastet, indem die Zunge 160 in Richtung des Pfeiles 187 (Fig. 14 und 26) soweit ausgelenkt wird, dass die Rastschultern 162 die Gegenrastschultern 192 freigeben. Die Trennung des Wischblatts vom Wischerarm 12 erfolgt dann entgegen der Richtung des Pfeils 185 (Fig. 25).

Der Lösevorgang bei der Ausführung nach den Fig. 20 und 21 erfolgt entsprechend, nachdem die Rastschultern 262 durch Auslenken in Richtung der Pfeile 287 (Fig. 20) außer Eingriff mit den Vorsprüngen 180 gebracht worden sind.

## Patentansprüche

1. Vorrichtung zum lösbaren Verbinden eines Wischblatts (14) zum Reinigen von Scheiben insbesondere von Kraftfahrzeugen mit einem angetriebenen Wischerarm (12), welcher eine wischerarmfeste erste Kupplungshälfte (32) und eine wischblattfeste zweite Kupplungshälfte (28) hat, die an der von der Scheibe (24) abgewandten oberen Bandfläche (26) eines bandartig lang gestreckten, federelastischen Tragelements (16) angeordnet ist, an dessen anderer, der Scheibe zugewandten unteren Bandfläche sich eine an der Scheibe anlegbare Wischleiste (20) befindet und das Wischblatt mit zwei zur zweiten Kupplungshälfte (40, 52) gehörenden, mit Abstand voneinander, insbesondere parallel zueinander und in Längsrichtung des Wischblatts ausgerichteten Stützwänden (42) versehen ist, an denen je ein Ende eines Gelenkbolzens (48) für ein auf diesem zwischen den Stützwänden pendelbar gelagertes Verbindungselement (52) zum Anschließen an den Wischerarm gehalten ist, **dadurch gekennzeichnet, dass** der Wischerarm (12) im Bereich seiner Kupplungshälfte (32) U-formig ausgebildet ist, dass die U-Basis (72) die Stützwände (42) abdeckt, dass sich die beiden U-Schenkel (70) die Außenseiten der Stützwände (42) überdeckend zum Tragelement (16) hin erstrecken, dass das Verbindungselement (52) aus einem federelastischen Material gefertigt und mit gegen eine Rückstellkraft auslenkbaren Rastmitteln (62) versehen ist, denen am Wischerarm (12) angeordnete Gegenrastmittel (80) zugeordnet sind und dass die Rastmittel des Verbindungselements (52) wenigstens eine in Längsrichtung des Wischblatts (14) weisende Rastschulter (62) haben, die mit einer ihr zugeordneten Gegenrastschulter (92) des Wischerarms (12) zusammenarbeitet.

2. Vorrichtung nach Anspruch 1, **dadurch gekennzeichnet, dass** die beiden Stützwände (42) durch die beiden U-Schenkel eines im Querschnitt U-förmigen Bauteils (40) gebildet sind, das mit seiner die Schenkel verbindenden U-Basis (44) der oberen Bandfläche (26) des Tragelements (16) zugewandt sich an dieser abstützt.

3. Vorrichtung nach einem der Ansprüche 1 oder 2, **dadurch gekennzeichnet, dass** die Rastmittel des Verbindungselements (52) durch eine an einer aus der Raststellung elastisch auslenkbaren Zunge (60 bzw. 160 bzw. 260) vorhandene Schulter (62 bzw. 162 bzw. 262) gebildet sind.

4. Vorrichtung nach Anspruch 3, **dadurch gekennzeichnet, dass** die Zunge (60) in einer auf der Scheibe (24) stehenden Ebene zur Scheibe hin auslenkbar ist, dass die Rastschulter (62) an der von der Scheibe abgewandten Seite der Zunge (60) angeordnet ist und dass die Gegenrastschulter (92) des Wischerarms (12) an der U-Basis (72) des Wischerarms ausgebildet ist.

5. Vorrichtung nach einem der Ansprüche 3 oder 4, **dadurch gekennzeichnet, dass** die elastische Zunge (60) an der von der Scheibe abgewandten Seite der Gelenkbolzenlagerstelle (56) und in deren Bereich am Verbindungselement (52) angeordnet ist.

6. Vorrichtung nach einem der Ansprüche 3 bis 5, **dadurch gekennzeichnet, dass** die elastische Zunge (160) in einer auf der Scheibe (24) stehenden Ebene von der Scheibe weg auslenkbar ist, dass die Rastschulter quer zur Auslenkebene der Zunge aus dieser als seitlicher Vorsprung (162) ausgebildet ist und dass die Gegenrastschulter (192) des Wischerarms (112) an dem dem Vorsprung benachbarten U-Schenkel (170) des Wischerarms vorgesehen ist.

7. Vorrichtung nach einem der Ansprüche 3 bis 6, **dadurch gekennzeichnet, dass** die Zunge (160) an ihrer der Scheibe zugewandten Seite mit einer Anlaufschräge (167) versehen ist, welche während der Anschließbewegung (Pfeil 185) mit der Gegenrastschulter (192) des Wischerarms (112) zusammenwirkend die Zunge in ihre Löseposition zwingt.

8. Vorrichtung nach einem der Ansprüche 3 bis 7, **dadurch gekennzeichnet, dass** die Zunge (160) an der der Antriebsseite (13) des Wischerarms (112) zugewandten Seite des Verbindungselements (152) an diesem angeordnet ist.

9. Vorrichtung nach einem der Ansprüche 1 bis 8, **dadurch gekennzeichnet, dass** die Rastmittel an zwei einander benachbarten in eine zur Scheibe annähernd parallelen Ebene zueinander hin auslenkbaren Rastarmen (260) ausgebildet sind, welche mit den an den U-Schenkeln (170) des Wischerarms (112) vorhandenen Gegenrastschultern (192) zusammen wirken.

10. Vorrichtung nach einem der Ansprüche 1 bis 9, **dadurch gekennzeichnet, dass** das Verbindungselement (52 bzw. 152) mit einem zur Rastschulter (62 bzw. 162) weisenden Montageanschlag (59 bzw. 159) versehen ist und dass der Abstand (94 bzw. 194) zwischen Montageanschlag und Rastschulter wenigstens so groß ist wie der Abstand (96 bzw. 196) zwischen der Gegenrastschulter (92 bzw. 192) des Wischerarms und einem von diesem abgewandten Montage-Gegenanschlag (78 bzw. 165) des Wischerarms (112).

11. Vorrichtung nach einem der Ansprüche 1 bis 10, **dadurch gekennzeichnet, dass** das Verbindungselement mit von seinen Rastschultern (62) weg in Längsrichtung des Wischerarms (12) federnd ausweichbaren Mitteln (68 bzw. 168) versehen ist, die mit einer wischerarmfesten Stütze (78 bzw. 165) zusammenwirken.

12. Vorrichtung nach Anspruch 11, **dadurch gekennzeichnet, dass** die federnd ausweichbaren Mittel durch am Montageanschlag (59 bzw. 159) angeordnete Federzungen (68 bzw. 168) gebildet sind.

13. Vorrichtung nach einem der Ansprüche 4 bis 12, **dadurch gekennzeichnet, dass** die Gegenrastschulter (92 bzw. 192) des Wischerarms durch vorzugsweise an den U-Schenkeln (70 bzw. 170) des Wischerarms (12 bzw. 112) paarweise angeordnete, auf einander zugerichtete Vorsprünge (78 bzw. 180) gebildet sind.

14. Vorrichtung nach Anspruch 13, **dadurch gekennzeichnet, dass** den Vorsprüngen (78) des Wischerarms (12) an den Seitenwangen des Verbindungselements (52) angeordnete Durchführkanäle (84) zugeordnet sind.

15. Vorrichtung nach einem der Ansprüche 1 bis 14, **dadurch gekennzeichnet, dass** am freien Ende des Wischerarms Mittel (80 bzw. 182) zum Sichern des Verbindungselements (52 bzw. 152) in dessen Betriebsstellung angeordnet sind.

16. Vorrichtung nach einem der Ansprüche 13 bis 15, **dadurch gekennzeichnet, dass** sich die Vorsprünge (78) des Wischerarms (12) bezogen auf den Gelenkbolzen (48) des Wischblatts (14) an der der Antriebsseite (13) zugewandten Seite befinden.

17. Vorrichtung nach einem der Ansprüche 1 bis 16, **dadurch gekennzeichnet, dass** die beiden Stützwände (42 bzw. 142) je eine Querbohrung (50 bzw. 150) aufweisen, deren Durchmesser auf den Durchmesser des Gelenkbolzens (48 bzw. 148) abgestimmt ist und deren Achsen miteinander fluchten.

18. Vorrichtung nach einem der Ansprüche 1 bis 17, **dadurch gekennzeichnet, dass** das unbelastete Tragelement (16) in seiner Längserstreckung gekrümmt ist, dass sich an der konvexen, äußeren Bandfläche (26) des Tragelements die wischblattseitige Kupplungshälfte (40, 52) für den Wischerarm (12) befindet und dass an der konkaven, inneren Bandfläche (18) des Tragelements die Wischleiste (20) längsachsenparallel angeordnet ist.

19. Wischblatt zum Reinigen von Scheiben insbesondere von Kraftfahrzeugen, das verbindbar ist mit einem angetriebenen Wischerarm (12), welcher eine wischerarmfeste erste Kupplungshälfte (32) hat, und das eine wischblattfeste zweite Kupplungshälfte (28) aufweist, die an einer insbesondere von der Scheibe (24) abgewandten oberen Bandfläche (26) eines bandartig langgestreckten, federelastischen Tragelements (16) angeordnet ist, an dessen anderer, insbesondere der Scheibe zugewandten unteren Bandfläche sich eine an der Scheibe anlegbare Wischleiste (20) befindet und das Wischblatt mit zwei zur zweiten Kupplungshälfte (40, 52) gehörenden, mit Abstand voneinander, insbesondere parallel zueinander und in Längsrichtung des Wischblatts ausgerichteten Stützwänden (42) versehen ist, an denen je ein Ende eines Gelenkbolzens (48) für ein auf diesem zwischen den Stützwänden pendelbar gelagertes Verbindungselement (52) zum Anschließen an den Wischerarm gehalten ist, das zum wischblattseitigen Teil der Kupplungshälfte (28) gehört, insbesondere zur Verwendung in einer Vorrichtung nach einem der Ansprüche 1 bis 19, **dadurch gekennzeichnet, dass** das Verbindungselement (52) aus einem federelastischen Material gefertigt und mit gegen eine Rückstellkraft auslenkbaren Rastmitteln (62) für am Wischerarm (12) angeordnete Gegenrastmittel (80) versehen ist, und dass die Rastmittel des Verbindungselements (52) wenigstens eine in Längsrichtung des Wischblatts (14) weisende Rastschulter (62) haben, die mit einer ihr zugeordneten Gegenrastschulter (92) des Wischerarms (12) zusammenarbeitet.

## Claims

1. Device for detachably connecting a wiper blade (14) for cleaning windows of, in particular, motor vehicles, to a driven wiper arm (12), which has a first coupling half (32), which is fixed to the wiper arm, and a second coupling half (28), which is fixed to the wiper blade and is arranged on the upper band surface (26), which faces away from the window (24), of a supporting element (16), which is elongate in the manner of a band, has spring elasticity and on the other, lower band surface of which, which faces the window, there is a wiper strip (20) which can be placed against the window, and the wiper blade is provided with two supporting walls (42), which belong to the second coupling half (40, 52), are aligned at a distance from each other, in particular parallel to each other and in the longitudinal direction of the wiper blade and on each of which is held one end of a hinge pin (48) for a connecting element (52), which is mounted on the said hinge pin in a manner such that it can oscillate between the supporting walls and is intended for connection to the wiper arm, **characterized in that** the wiper arm (12) is of U-shaped design in the region of its coupling half (32), **in that** the U-base (72) covers the supporting walls (42), **in that** the two U-limbs (70) extend towards the supporting element (16) in a manner overlapping the outer sides of the supporting walls (42), **in that** the connecting element (52) is manufactured from a material with spring elasticity and is provided with latching means (62) which can be deflected counter to a restoring force and which are assigned mating latching means (80) arranged on the wiper arm (12), and **in that** the latching means of the connecting element (52) have at least one latching shoulder (62) which points in the longitudinal direction of the wiper blade (14) and cooperates with a mating latching shoulder (92), assigned to it, of the wiper arm (12).

2. Device according to Claim 1, **characterized in that** the two supporting walls (42) are formed by the two U-limbs of a component (40) which is U-shaped in cross section and, with its U-base (44) which connects the limbs facing the upper band surface (26) of the supporting element (16), is supported on the said band surface.

3. Device according to either of Claims 1 and 2, **characterized in that** the latching means of the connecting element (52) are formed by a shoulder (62 or 162 or 262) present on a tongue (60 or 160 or 260) which can be elastically deflected out of the latching position.

4. Device according to Claim 3, **characterized in that** the tongue (60) can be deflected towards the window in a plane perpendicular to the window (24), **in that** the latching shoulder (62) is arranged on that side of the tongue (60) which faces away from the window, and **in that** the mating latching shoulder (92) of the wiper arm (12) is formed on the U-base (72) of the wiper arm.

5. Device according to either of Claims 3 and 4, **characterized in that** the elastic tongue (60) is arranged on that side of the hinge-pin bearing point (56) which faces away from the window and is arranged on the connecting element (52) in the region of the said hinge-pin bearing point.

6. Device according to one of Claims 3 to 5, **characterized in that** the elastic tongue (160) can be deflected away from the window in a plane perpendicular to the window (24), **in that** the latching shoulder is designed as a lateral projection (162) from the tongue transversely with respect to the deflecting plane of the said tongue, and **in that** the mating latching shoulder (192) of the wiper arm (112) is provided on the U-limb (170) of the wiper arm, which U-limb is adjacent to the projection.

7. Device according to one of Claims 3 to 6, **characterized in that** the tongue (160) is provided on its side facing the window with a run-on slope (167) which, interacting with the mating latching shoulder (192) of the wiper arm (112) during the connecting movement (arrow 185), forces the tongue into its release position.

8. Device according to one of Claims 3 to 7, **characterized in that** the tongue (160) is arranged on the connecting element (152), on that side thereof which faces the driving side (13) of the wiper arm (112).

9. Device according to one of Claims 1 to 8, **characterized in that** the latching means are formed on two mutually adjacent latching arms (260) which can be deflected towards each other into a plane approximately parallel to the window and which interact with the mating latching shoulders (192) present on the U-limbs (170) of the wiper arm (192).

10. Device according to one of Claims 1 to 9, **characterized in that** the connecting element (52 or 152) is provided with an installation stop (59 or 159) pointing to the latching shoulder (62 or 162), and **in that** the distance (94 or 194) between the installation stop and latching shoulder is at least as large as the distance (96 or 196) between the mating latching shoulder (92 or 192) of the wiper arm and an installation mating stop (78 or 165) of the wiper arm (112), which installation mating stop faces away from the mating latching shoulder.

11. Device according to one of Claims 1 to 10, **characterized in that** the connecting element is provided with means (68 or 168) which can be deflected resiliently away from its latching shoulders (62) in the longitudinal direction of the wiper arm (12) and interact with a support (78 or 165) fixed to the wiper arm.

12. Device according to Claim 11, **characterized in that** the resiliently deflectable means are formed by spring tongues (68 or 168) arranged on the installation stop (59 or 159).

13. Device according to one of Claims 4 to 12, **characterized in that** the mating latching shoulders (92 or 192) of the wiper arm are formed by projections (78 or 180) which are preferably arranged in pairs on the U-limbs (70 or 170) of the wiper arm (12 or 112) and are directed towards each other.

14. Device according to Claim 13, **characterized in that** the projections (78) of the wiper arm (12) are assigned lead-through channels (84) arranged on the side cheeks of the connecting element (52).

15. Device according to one of Claims 1 to 14, **characterized in that** means (80 or 182) for securing the connecting element (52 or 152) in its operating position are arranged at the free end of the wiper arm.

16. Device according to one of Claims 13 to 15, **characterized in that** the projections (78) of the wiper arm (12) are located, with respect to the hinge pin (48) of the wiper blade (14), on the side facing the driving side (13).

17. Device according to one of Claims 1 to 16, **characterized in that** the two supporting walls (42 or 142) each have a transverse hole (50 or 150), the diameter of which is matched to the diameter of the hinge pin (48 or 148) and the axes of which are aligned with each other.

18. Device according to one of Claims 1 to 17, **characterized in that** the unloaded supporting element (16) is curved in its longitudinal extent, **in that** the wiper-blade coupling half (40, 52) for the wiper arm (12) is situated on the convex, outer band surface (26) of the supporting element, and **in that** the wiper strip (20) is arranged parallel to the longitudinal axis on the concave, inner band surface (18) of the supporting element.

19. Wiper blade for cleaning windows of, in particular, motor vehicles, which can be connected to a driven wiper arm (12), which has a first coupling half (32), which is fixed to the wiper arm, and which has a second coupling half (28), which is fixed to the wiper blade and is arranged on an upper band surface (26), which in particular faces away from the window (24), of a supporting element (16) which is elongated in the manner of a band, has spring elasticity and on the other, lower band surface of which, which in particular faces the window, there is a wiper strip (20) which can be placed against the window, and the wiper blade is provided with two supporting walls (42), which belong to the second coupling half (40, 52), are aligned at a distance from each other, in particular parallel to each other and in the longitudinal direction of the wiper blade and on each of which is held one end of a hinge pin (48) for a connecting element (52), which is mounted on the said hinge pin in a manner such that it can oscillate between the supporting walls and is intended for connection to the wiper arm which belongs to the wiper-blade part of the coupling half (28), in particular for use in a device according to one of Claims 1 to 19, **characterized in that** the connecting element (52) is manufactured from a material with spring elasticity and is provided with latching means (62) which can be deflected counter to a restoring force and are intended for mating latching means (80) arranged on the wiper arm (12), and **in that** the latching means of the connecting element (52) have at least one latching shoulder (62) which points in the longitudinal direction of the wiper blade (14) and cooperates with a mating latching shoulder (92), assigned to it, of the wiper arm (12).

## Revendications

1. Dispositif pour relier de manière amovible un balai d'essuie-glace (14) destiné à nettoyer les vitres notamment de véhicules automobiles, à un bras d'essuie-glace (12), entraîné, comprenant une première moitié de dispositif d'accouplement (32) solidaire du bras d'essuie-glace et une seconde moitié du dispositif d'accouplement (28) solidaire du balai d'essuie-glace, cette dernière étant installée sur la surface supérieure en forme de ruban (26) non tournée vers la vitre (24) d'un élément de support (16) en forme de ruban, allongé, élastique comme un ressort, et dont l'autre face inférieure du ruban tournée vers la vitre porte une lame d'essuyage (20) s'appliquant contre la vitre, le balai d'essuie-glace étant muni de deux parois d'appui (42) qui, faisant partie de la seconde moitié du dispositif d'accouplement (40, 52), sont écartées l'une de l'autre en étant notamment parallèles l'une à l'autre dans la direction longitudinale du balai d'essuie-glace, et dont chacune des parois d'appui comporte une extrémité d'un axe d'articulation (48) pour un élément de liaison (52) installé libre en pivotement entre les parois d'appui pour le raccordement au bras d'essuie-glace,
**caractérisé en ce que**
le bras d'essuie-glace (12) a une forme de U au niveau de la moitié de la pièce d'accouplement (38),
la base (72) de la forme en U couvre les parois d'appui (42),
les deux branches (70) de la forme en U couvrent les côtés extérieurs des parois d'appui (42) en direction de l'élément de support (16),
l'élément de liaison (52) est fabriqué en une matière élastique comme du caoutchouc et comporte des moyens d'encliquetage (62) que l'on peut dégager en agissant contre une force de rappel, et auxquels sont associés des moyens d'encliquetage complémentaires (80) du bras d'essuie-glace (12), et
les moyens d'encliquetage de l'élément de liaison (52) ont au moins un épaulement d'encliquetage (62) dirigé dans la direction longitudinale du balai d'essuie-glace (14), cet épaulement coopérant avec un épaulement d'encliquetage complémentaire (92) du bras d'essuie-glace (12).

2. Dispositif selon la revendication 1,
**caractérisé en ce que**
les deux parois d'appui (42) sont formées par les deux branches de U d'une pièce (40) ayant en section une forme de U, et dont la base (44) de la forme en U reliant les branches et tournée vers la face supérieure de ruban (26) de l'élément de support (16) s'appuie contre cette face.

3. Dispositif selon l'une des revendications 1 ou 2,
**caractérisé en ce que**
les moyens d'encliquetage de l'élément de liaison (52) sont formés par un épaulement (62, 162, 262) prévu sur une languette (60, 160, 260) qui se dégage élastiquement de la position d'encliquetage.

4. Dispositif selon la revendication 3,
**caractérisé en ce que**
la languette (60) peut être dégagée vers la vitre dans un plan dirigé vers la vitre (24), l'épaulement d'encliquetage (62) étant prévu sur le côté de la languette (60) non tourné vers la vitre alors que l'épaulement d'encliquetage complémentaire (92) du bras d'essuie-glace (12) est réalisé sur la base (72) de la forme en U du bras d'essuie-glace.

5. Dispositif selon l'une des revendications 3 ou 4,
**caractérisé en ce que**
la languette élastique (60) est prévue sur le côté du point de palier d'axe d'articulation (56) non tourné vers la vitre et à ce niveau sur l'élément de liaison (52).

6. Dispositif selon l'une des revendications 3 à 5,
**caractérisé en ce que**
la languette élastique (160) peut être dégagée de la vitre dans un plan dirigé vers la vitre (24),
l'épaulement d'encliquetage est une saillie latérale (162) transversale par rapport au plan de dégagement de la languette, et
l'épaulement d'encliquetage complémentaire (192) du bras d'essuie-glace (112) est prévu sur la branche (170) de la forme en U du bras d'essuie-glace au voisinage de la partie en saillie.

7. Dispositif selon l'une des revendications 3 à 6,
**caractérisé en ce que**
le côté de la languette (160) tourné vers la vitre comporte une rampe d'attaque (167) qui force la languette à venir dans sa position de dégagement pendant le mouvement de raccordement (flèche 185) avec l'épaulement d'encliquetage complémentaire (192) du bras d'essuie-glace (112).

8. Dispositif selon l'une des revendications 3 à 7,
**caractérisé en ce que**
la languette (160) est prévue sur le côté de l'élément de liaison (152) tourné vers le côté d'entraînement (13) du bras d'essuie-glace (112).

9. Dispositif selon l'une des revendications 1 à 8,
**caractérisé en ce que**
les moyens d'encliquetage sont réalisés sur deux bras d'encliquetage (260) voisins, qui peuvent être déviés l'un par rapport à l'autre dans un plan sensiblement parallèle à la vitre, et qui coopèrent avec les épaulements complémentaires (192) prévus sur les branches en U (170) du bras d'essuie-glace (112).

10. Dispositif selon l'une des revendications 1 à 9,
**caractérisé en ce que**
l'élément de liaison (52, 152) comporte une butée de montage (59, 159) tournée vers l'épaulement d'encliquetage (62, 162), et
la distance (94, 194) entre la butée de montage et l'épaulement d'encliquetage est au moins aussi grande que la distance (96, 196) entre l'épaulement d'encliquetage complémentaire (92, 192) du bras d'essuie-glace et une butée complémentaire de montage (78, 165) du bras d'essuie-glace (112), cette butée n'étant pas tournée vers le bras d'essuie-glace.

11. Dispositif selon l'une des revendications 1 à 10,
**caractérisé en ce que**
l'élément de liaison est muni de moyens (68, 168) qui s'échappent élastiquement de ses épaulements d'encliquetage (62) dans la direction longitudinale du bras d'essuie-glace (112), ces moyens coopérant avec un appui solidaire du bras d'essuie-glace (78, 165).

12. Dispositif selon la revendication 11,
**caractérisé en ce que**
les moyens s'échappant élastiquement sont formés par des languettes élastiques (68, 168) prévues sur la butée de montage (59, 159).

13. Dispositif selon l'une des revendications 4 à 12,
**caractérisé en ce que**
les épaulements d'encliquetage complémentaires (92, 192) du bras d'essuie-glace sont formés par des parties en saillie (78, 180) dirigées l'une vers l'autre, installées par paires, de préférence sur les branches en U (70, 170) du bras d'essuie-glace (12, 112).

14. Dispositif selon la revendication 13,
**caractérisé en ce que**
les parties en saillie (78) du bras d'essuie-glace (12) sont prévues au niveau des canaux de passage (84) des joues latérales de l'élément de liaison (52).

15. Dispositif selon l'une des revendications 1 à 14,
**caractérisé en ce que**
l'extrémité libre du bras d'essuie-glace comporte des moyens (80, 182) pour fixer l'élément de liaison (52, 152) dans sa position de fonctionnement.

16. Dispositif selon l'une des revendications 13 à 15,
**caractérisé en ce que**
les parties en saillie (78) du bras d'essuie-glace (12) se trouvent du côté d'entraînement (13) par rapport à l'axe d'articulation (48) du balai d'essuie-glace (14).

17. Dispositif selon l'une des revendications 1 à 16,
**caractérisé en ce que**
les deux parois d'appui (42, 142) ont chacune un perçage transversal (50, 150) dont le diamètre correspond au diamètre de l'axe d'articulation (48, 148) et les axes des perçages sont alignés.

18. Dispositif selon l'une des revendications 1 à 17,
**caractérisé en ce que**
l'élément de support (16) non sollicité est cintré dans sa direction longitudinale et la face extérieure de ruban (26) convexe de l'élément de support comporte la moitié côté balai d'essuie-glace du dispositif d'accouplement (40, 52) du bras d'essuie-glace (12), et la face interne concave du ruban (18) de l'élément de support est parallèle longitudinalement à la lame d'essuyage (20).

19. Balai d'essuie-glace pour nettoyer des vitres, notamment des vitres de véhicules, qui peut être relié à un bras d'essuie-glace (12) entraîné muni d'une première moitié du dispositif d'accouplement (32) solidaire du bras et une seconde moitié de dispositif d'accouplement (28) solidaire du balai d'essuie-glace et prévue sur la face supérieure du ruban (26) d'un élément de support (16) élastique comme un ressort, allongé en forme de ruban, face non tournée vers la vitre (24) et dont l'autre face inférieure de ruban tournée notamment vers la vitre comporte une lame d'essuie-glace (20) s'appliquant contre la vitre, le balai d'essuie-glace comportant deux parois d'appui (42) qui en faisant partie de la seconde moitié du dispositif d'accouplement (40, 52), sont écartées l'une de l'autre, notamment parallèles l'une à l'autre, dans la direction longitudinale du balai d'essuie-glace, ces parois tenant chacune une extrémité d'un axe d'articulation (48) d'un élément de liaison (52) qui, monté de manière pivotante entre les parois d'appui, et assurant la liaison avec le bras d'essuie-glace, appartient à la partie de la moitié de dispositif d'accouplement (28) côté balai d'essuie-glace, notamment pour utiliser un dispositif selon l'une des revendications 1 à 19,
**caractérisé en ce que**
l'élément de liaison (52) est fabriqué en une matière élastique comme un ressort et est muni de moyens d'encliquetage (62) que l'on peut faire dévier contre une force de rappel pour des moyens d'encliquetage complémentaires (80) portés par le bras d'essuie-glace (12), et les moyens d'encliquetage de l'élément de liaison (52) ont au moins un épaulement (62) dirigé dans la direction longitudinale du balai d'essuie-glace (14), et coopérant avec un épaulement d'encliquetage complémentaire (92), associé, du bras d'essuie-glace (12).
